# FASCICULE DE BREVET EUROPEEN

(11) **EP 2 594 175 B1**
(45) Date de publication et mention de la délivrance du brevet: **09.07.2014**
(21) Numéro de dépôt: 12193038.2
(22) Date de dépôt: 16.11.2012
(51) Int. Cl.: A47J 36/20, A47J 37/12, A47J 45/07, A47J 43/046, A47J 27/04, A47J 36/16

(54) **Appareil électroménager de préparation culinaire comportant un récipient de travail comprenant un panier pour la cuisson à la vapeur**
Elektrohaushaltsgerät zur Essenszubereitung, das einen Arbeitsbehälter umfasst, der einen Dampfgarkorb enthält
Kitchen appliance comprising a working container including a basket for steam cooking

(30) Priorité: 21.11.2011 FR 1160573
(43) Date de publication de la demande: 22.05.2013
(73) Titulaire: SEB S.A., 69130 Ecully (FR)
(72) Inventeur: Beaudet, Jean-Yves, 61410 Haleine (FR)
(74) Mandataire: Bourrières, Patrice

(56) Documents cités:
- FR-A1- 2 326 171
- FR-A5- 2 037 917
- US-A1- 2010 255 168

## Description

La présente invention se rapporte au domaine technique général des appareils électroménagers de préparation culinaire comportant un récipient de travail renfermant un outil entraîné en rotation par un moteur et comprenant un dispositif de chauffage destiné à chauffer le récipient de travail, et se rapporte plus particulièrement à un appareil électroménager comprenant un panier pour la cuisson à la vapeur pouvant être disposé à l'intérieur du récipient de travail, le panier comportant une poignée amovible pouvant être fixée au panier dans une position dans laquelle la poignée fait saillie en dehors du récipient de travail lorsque le panier est disposé dans le récipient de travail.

Il est connu, de la demande de brevet FR 2 326 171, un appareil de préparation culinaire comprenant un récipient de travail renfermant un outil entraîné en rotation par un moteur, le récipient de travail comportant une résistance chauffante disposée dans le fond du récipient de travail et un panier pour la cuisson à la vapeur. Dans ce document, le panier comporte une poignée amovible munie d'une extrémité crochue pouvant s'accrocher à un orifice du panier dans une position sensiblement verticale dans laquelle la poignée fait saillie en dehors du récipient de travail pour permettre une extraction aisée du panier et éviter notamment de se brûler au contact des parois du récipient de travail.

Cependant, dans cet appareil, il n'est pas prévu de logement pour le rangement de la poignée de sorte que cette dernière peut être facilement perdue. Pour remédier à cet inconvénient, l'utilisateur peut placer la poignée amovible dans le récipient de travail lors du stockage de l'appareil, cependant un tel emplacement de la poignée génère des chocs et du bruit lors du transport de l'appareil. De plus, un panier muni d'une telle poignée amovible présente l'inconvénient d'obliger l'utilisateur à accrocher puis décrocher la poignée amovible du récipient de travail à chaque fois qu'il souhaite sortir ou mettre le panier dans le récipient de travail, ce qui peut rendre l'opération fastidieuse.

Aussi, un but de la présente invention est de proposer un appareil électroménager de préparation culinaire remédiant à ces inconvénients qui soit simple et économique à réaliser.

A cet effet, l'invention se rapporte à un appareil électroménager de préparation culinaire comportant un récipient de travail renfermant un outil entraîné en rotation par un moteur, un dispositif de chauffage destiné à chauffer le récipient de travail et un panier pour la cuisson à la vapeur pouvant être disposé à l'intérieur du récipient de travail, le panier comportant une poignée amovible pouvant être fixée au panier dans une première position dans laquelle la poignée fait saillie en dehors du récipient de travail lorsque le panier est disposé dans le récipient de travail, caractérisé en ce que le panier comporte des moyens d'accrochage permettant de fixer la poignée dans une deuxième position dans laquelle la poignée s'étend en travers du panier et reste contenue dans le récipient de travail lorsque le panier est disposé dans le récipient de travail.

Une telle caractéristique présente l'avantage de permettre le stockage de la poignée sur le panier dans une position dans laquelle le couvercle du récipient de travail peut être fermé. En particulier, lorsque la poignée est stockée dans cette position, l'appareil peut être transporté sans que la poignée ne génère des chocs et du bruit à l'intérieur du récipient de travail, la poignée étant parfaitement immobilisée sur le panier. De plus, l'immobilisation de la poignée en travers du panier présente l'avantage d'offrir une prise pour la main permettant une extraction et une remise en place aisées du panier à l'intérieur du récipient de travail.

Selon une autre caractéristique de l'invention, dans la deuxième position d'accrochage, la poignée est contenue dans le volume du panier.

Une telle caractéristique présente l'avantage d'avoir une position de rangement de la poignée sur le panier dans laquelle l'encombrement du panier n'est pas augmenté.

Selon une autre caractéristique de l'invention, le panier présente une forme cylindrique, la poignée étant disposée radialement au sommet du panier lorsqu'elle se trouve dans la deuxième position d'accrochage.

Une telle caractéristique présente l'avantage d'offrir un excellent accès à la poignée.

Selon une autre caractéristique de l'invention, la poignée présente une longueur sensiblement égale au diamètre du panier.

Selon encore une autre caractéristique de l'invention, le panier comporte deux empreintes disposées à proximité du sommet du panier et destinées à recevoir les extrémités de la poignée.

Selon encore une autre caractéristique de l'invention, l'une des empreintes comporte une ouverture destinée à recevoir un crochet porté par une extrémité de la poignée.

Selon une autre caractéristique de l'invention, l'autre empreinte comporte un bossage venant s'engager élastiquement dans une encoche portée par une extrémité de la poignée.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective, coupée, d'un appareil mélangeur selon un mode particulier de réalisation de l'invention,
- la figure 2 est une vue en perspective de l'appareil de la figure 1 démuni de son couvercle et équipé d'un panier pour la cuisson à la vapeur,
- la figure 3 est une vue en coupe, selon la ligne III-III de la figure 1, de l'appareil équipé du panier avec la poignée dans une première position d'accrochage,
- la figure 4 est une vue en perspective du panier représenté seul, avec la poignée dans la première position d'accrochage,
- la figure 5 est une vue en perspective du panier représenté seul, avec la poignée amovible dans une deuxième position d'accrochage,
- la figure 6 est une vue en coupe, selon la ligne III-III de la figure 1, de l'appareil équipé du panier avec la poignée dans la deuxième position d'accrochage.

Seuls les éléments nécessaires à la compréhension de l'invention ont été représentés. Pour faciliter la lecture des dessins, les mêmes éléments portent les mêmes références d'une figure à l'autre.

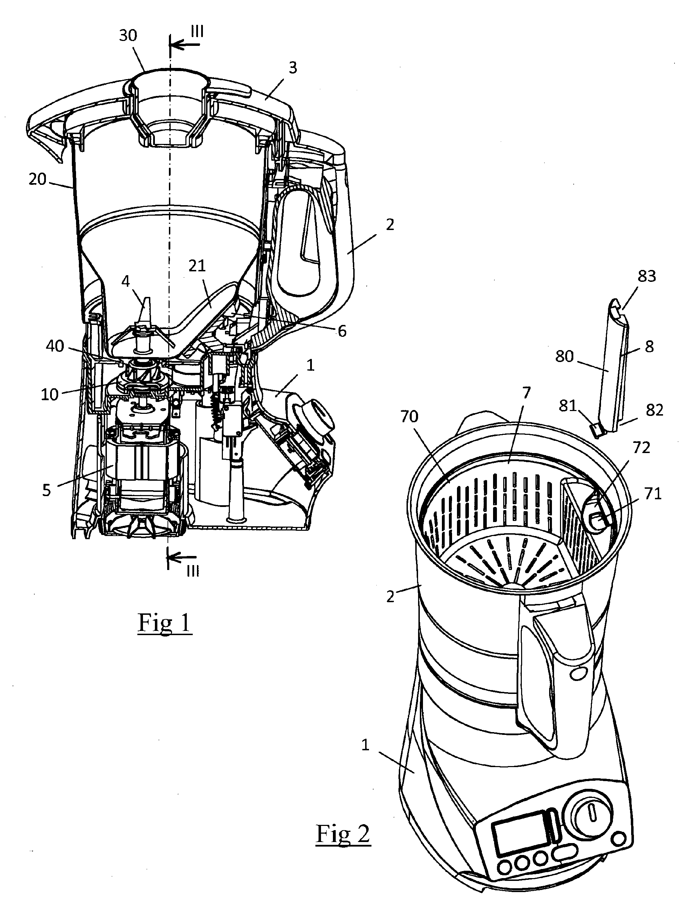

La figure 1 représente un appareil électroménager de préparation culinaire tel que décrit plus en détails dans la demande de brevet FR 2 953 390 déposée par la demanderesse, cet appareil comportant une base 1 supportant un récipient de travail 2 amovible fermé par un couvercle 3, ce dernier étant muni d'une ouverture centrale fermée par un bouchon doseur 30.

Le récipient de travail 2 comporte une enveloppe 20 cylindrique et comprend un fond 21 métallique supportant un outil rotatif 4 dont l'extrémité inférieure comporte un entraîneur 40 venant coopérer avec un entraîneur 10 porté par la base 1, cet entraîneur 10 étant classiquement entraîné en rotation par un moteur 5 intégré dans la base.

Le fond 21 du récipient de travail reçoit une résistance chauffante 6 électrique en forme de U, du type résistance blindée, qui est disposée contre une partie inclinée du fond 21, cette partie inclinée du fond 21 étant surélevée par rapport à l'outil rotatif 4 de sorte que le volume autour de l'outil rotatif 4 constitue un foyer de mixage de volume réduit dans lequel les aliments projetés contre la partie inclinée sont ramenés par gravité.

De manière connue en soi, la base 1 comporte une carte de commande, non représentée sur les figures, qui contrôle à la fois le fonctionnement du moteur 5 et le fonctionnement de la résistance chauffante 6, cette carte de commande recevant la valeur de la température mesurée par un palpeur de température et assurant la régulation de l'alimentation de la résistance chauffante 6 de façon à amener le contenu du récipient de travail 2 à une température de consigne.

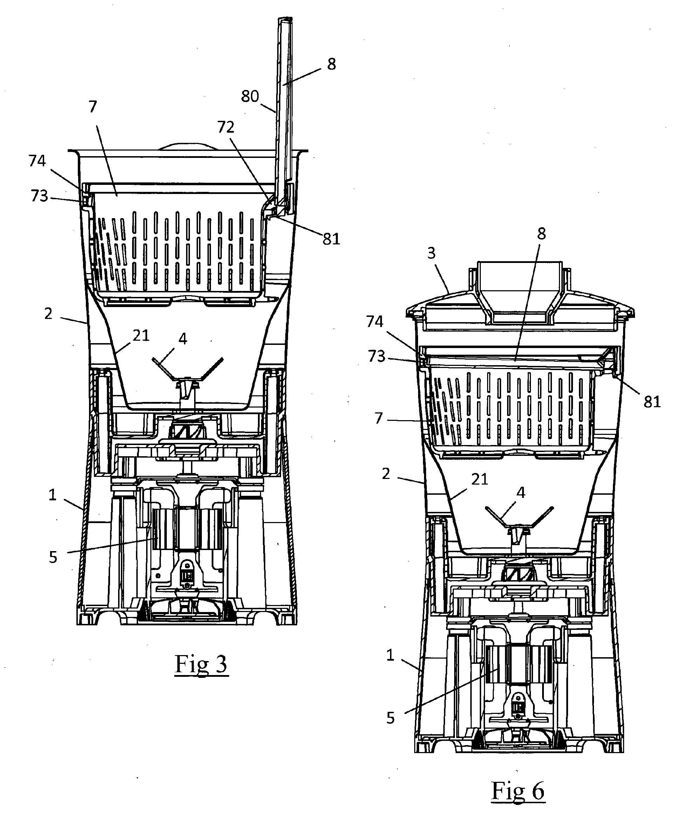

Plus particulièrement selon l'invention et conformément aux figures 2 et 3, le récipient de travail 2 reçoit un panier 7 destiné à la cuisson des aliments à la vapeur, ce panier 7 comportant une paroi 70 cylindrique munie de multiples fentes pour le passage de la vapeur et présentant un diamètre légèrement inférieur au diamètre de l'enveloppe 20 du récipient de travail 2 de sorte que le panier 7 prend place entièrement à l'intérieur du récipient de travail 2.

De manière préférentielle, le panier 7 est réalisé en matériau plastique résistant à la chaleur, tel que du polypropylène ou du polyamide, et est immobilisé verticalement au dessus de l'outil rotatif 4 en venant reposer contre une paroi conique du fond 21 du récipient, ainsi que cela est illustré sur la figure 3, le panier 7 comprenant une poignée 8 amovible présentant une surface de préhension 80 convexe et une extrémité inférieure munie d'un crochet 81 destiné à être introduit dans une ouverture 71 ménagée en bordure de l'extrémité supérieure du panier 7.

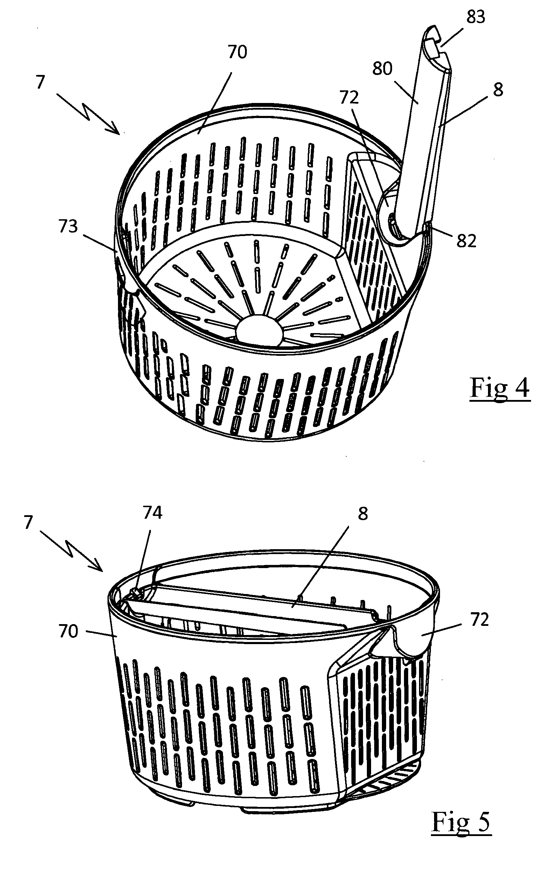

Le dos de la surface de préhension 80 présente une échancrure 82 adaptée pour recevoir le bord supérieur du récipient de travail 2 et permettre le basculement de la poignée 8 dans une première position d'accrochage, illustrée sur les figures 3 et 4, dans laquelle la poignée 8 est disposée sensiblement verticalement et fait saillie en dehors du récipient de travail 2, le crochet 81 étant alors engagé sous le bord de l'ouverture 71 afin que la poignée 8 soit rendue solidaire du panier 7 lorsqu'une traction est effectuée verticalement sur cette dernière.

Conformément à la figure 2, l'ouverture 71 est préférentiellement placée au fond d'une première empreinte 72 ménagée au sommet du panier 7, l'empreinte 72 présentant une forme concave complémentaire de la surface de préhension 80 convexe de la poignée de sorte que la poignée 8 peut être basculée dans une deuxième position d'accrochage, illustrée sur les figures 5 et 6, dans laquelle la poignée 8 se trouve disposée parallèlement au fond du panier 7, en étant contenue dans le volume du panier 7, l'extrémité supérieure de la poignée 8 venant s'engager dans une seconde empreinte 73 disposée en vis-à-vis de la première empreinte 72, en bordure de l'extrémité supérieure du panier 7.

La poignée 8 est immobilisée dans la deuxième position par un élément de verrouillage constitué par un bossage 74 disposé au niveau de la seconde empreinte 73, le bossage 74 venant s'engager élastiquement, par déformation de la paroi 70 du panier 7, dans une encoche 83 ménagée à l'extrémité supérieure de la poignée 8.

La poignée 8 ainsi immobilisée dans la deuxième position présente l'avantage d'être parfaitement intégrée dans le volume du panier 7 de sorte que le panier 7, muni de sa poignée 8, peut être disposé dans le récipient de travail 2, par exemple pour son rangement, sans que la poignée ne vienne gêner la fermeture du couvercle 3, ainsi que cela est illustré sur la figure 6. Une telle fixation de la poignée 8 en travers du panier 7 présente également l'avantage de faciliter grandement l'extraction ou la mise en place du panier 7 dans le récipient de travail 2 puisque la poignée 8 est alors solidaire du panier 7 et est parfaitement accessible.

Lorsque l'utilisateur souhaite utiliser l'appareil pour cuire des aliments à la vapeur, il lui suffit de retirer la poignée 8 du panier 7 en exerçant une traction sur l'extrémité de la poignée 8 afin de désengager le bossage 74 de l'encoche 83, puis de défaire le crochet 81 de l'ouverture 71. Le panier 7 démuni de sa poignée 8 peut alors être disposé, avec les aliments à cuire, dans le récipient de travail 2. Une fois la cuisson réalisée, le panier 7 peut être extrait du récipient de travail 2 en insérant le crochet 81 dans l'ouverture 71 du panier 7 et en disposant la poignée 8 dans la première position illustrée sur la figure 3, dans laquelle la poignée 8 fait saillie verticalement en dehors du récipient de travail 2, sorte que le panier 7 peut être retiré, sans risque de brûlure, en tirant sur la poignée 8.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, le panier pourra être réalisé en métal.

## Revendications

1. Appareil électroménager de préparation culinaire comportant un récipient de travail (2) renfermant un outil (4) entraîné en rotation par un moteur (5), un dispositif de chauffage (6) destiné à chauffer le récipient de travail (2) et un panier (7) pour la cuisson à la vapeur pouvant être disposé à l'intérieur du récipient de travail (2), le panier (7) comportant une poignée (8) amovible pouvant être fixée au panier (7) dans une première position dans laquelle la poignée (8) fait saillie en dehors du récipient de travail (2) lorsque le panier (7) est disposé dans le récipient de travail (2), **caractérisé en ce que** ledit panier (7) comporte des moyens d'accrochage (74) permettant de fixer la poignée (8) dans une deuxième position dans laquelle la poignée (8) s'étend en travers du panier (7) et reste contenue dans le récipient de travail (2) lorsque le panier (7) est disposé dans le récipient de travail (2).

2. Appareil électroménager de préparation culinaire selon la revendication 1, **caractérisé en ce que**, dans la deuxième position d'accrochage, la poignée (8) est contenue dans le volume du panier (7).

3. Appareil électroménager de préparation culinaire selon l'une quelconque des revendications 1 à 2, **caractérisé en ce que** le panier (7) présente une forme cylindrique et **en ce que** la poignée (8) est disposée radialement au sommet du panier (7) lorsqu'elle se trouve dans la deuxième position d'accrochage.

4. Appareil électroménager de préparation culinaire selon la revendication 3, **caractérisé en ce que** la poignée (8) présente une longueur sensiblement égale au diamètre du panier (7).

5. Appareil électroménager de préparation culinaire selon l'une quelconque des revendications 3 à 4, **caractérisé en ce que** le panier (7) comporte deux empreintes (72, 73) disposées à proximité du sommet du panier (7) et destinées à recevoir les extrémités de la poignée (8).

6. Appareil électroménager de préparation culinaire selon la revendication 5, **caractérisé en ce que** l'une des empreintes (72) comporte une ouverture (71) destinée à recevoir un crochet (81) porté par une extrémité de la poignée (8).

7. Appareil électroménager de préparation culinaire selon la revendication 6, **caractérisé en ce que** l'autre empreinte (73) comporte un bossage (74) venant s'engager élastiquement dans une encoche (83) portée par une extrémité de la poignée (8).

## Patentansprüche

1. Elektrohaushaltsgerät zur Zubereitung von Speisen mit einem Arbeitsbehälter (2), der ein Werkzeug (4), das durch einen Motor (5) in Drehung versetzt wird, eine Heizvorrichtung (6), die dazu bestimmt ist, den Arbeitsbehälter (2) zu erhitzen und einen Korbeinsatz (7) zum Dampfgaren, der in den Arbeitsbehälter (2) eingesetzt werden kann, umschließt, wobei der Korbeinsatz (7) einen abnehmbaren Griff (8) umfasst, der am Korbeinsatz (7) befestigt werden kann, und zwar in einer ersten Position, in welcher der Griff (8) aus dem Arbeitsbehälter (2) herausragt, wenn der Korbeinsatz (7) in den Arbeitsbehälter (2) eingesetzt wird, **dadurch gekennzeichnet, dass** der genannte Korbeinsatz (7) über Einhakvorrichtungen (74) verfügt, anhand derer der Griff (8) in einer zweiten Position, in welcher der Griff (8) sich über den Korbeinsatz (7) erstreckt und im Arbeitsbehälter (2) verbleibt, befestigt werden kann, während der Korbeinsatz (7) im Arbeitsbehälter (2) eingesetzt ist.

2. Elektrohaushaltsgerät zur Zubereitung von Speisen nach Anspruch 1, **dadurch gekennzeichnet, dass** in der zweiten Einhakposition der Griff (8) im Umfang des Korbeinsatzes (7) eingeschlossen ist.

3. Elektrohaushaltsgerät zur Zubereitung von Speisen nach einem der Ansprüche 1 bis 2, **dadurch gekennzeichnet, dass** der Korbeinsatz (7) eine zylindrische Form aufweist und dass der Griff (8) radial am Scheitel des Korbeinsatzes (7) eingesetzt ist, wenn er sich in der zweiten Einhakposition befindet.

4. Elektrohaushaltsgerät zur Zubereitung von Speisen nach Anspruch 3, **dadurch gekennzeichnet, dass** der Griff (8) eine Länge aufweist, die etwa dem Durchmesser des Korbeinsatzes (7) entspricht.

5. Elektrohaushaltsgerät zur Zubereitung von Speisen nach einem der Ansprüche 3 bis 4, **dadurch gekennzeichnet, dass** der Korbeinsatz (7) zwei Vertiefungen (72, 73) umfasst, die neben dem Scheitel des Korbeinsatzes (7) angebracht sind und dazu bestimmt sind, die Enden des Griffs (8) aufzunehmen.

6. Elektrohaushaltsgerät zur Zubereitung von Speisen nach Anspruch 5, **dadurch gekennzeichnet, dass** eine der beiden Vertiefungen (72) eine Öffnung (71) umfasst, die dazu bestimmt ist, einen Haken (81) aufzunehmen, der durch ein Ende des Griffs (8) getragen wird.

7. Elektrohaushaltsgerät zur Zubereitung von Speisen nach Anspruch 6, **dadurch gekennzeichnet, dass** die andere Vertiefung (73) einen Vorsprung (74) umfasst, der elastisch in eine Kerbe (83) einrastet, die durch ein Ende des Griffs (8) getragen wird.

## Claims

1. Electrical household food preparation appliance comprising a working receptacle (2) containing a tool (4) driven in rotation by a motor (5), a heating device (6) for heating the working receptacle (2) and a basket (7) for steam cooking which can be arranged inside the working receptacle (2), the basket (7) having a removable handle (8) attachable to the basket (7) in a first position in which the handle (8) projects out of the working receptacle (2) when the basket (7) is placed in the working receptacle (2), **characterised in that** said basket (7) comprises hooking means (74) for fixing the handle (8) in a second position wherein the handle (8) extends through the basket (7) and remains contained in the working receptacle (2) when the basket (7) is placed in the working receptacle (2).

2. Electrical household food preparation appliance according to claim 1, **characterised in that**, in the second hooking position, the handle (8) is contained within the volume of the basket (7).

3. Electrical household food preparation appliance according to claim 1 to 2, **characterised in that** the basket (7) has a cylindrical shape and **in that** the handle (8) is arranged radially at the top of the basket (7) when in the second hooking position.

4. Electrical household food preparation appliance according to claim 3, **characterised in that** the length of the handle (8) is substantially equal to the diameter of the basket (7).

5. Electrical household food preparation appliance according to claim 3 or 4, **characterised in that** the basket (7) has two recesses (72, 73) arranged near the top of the basket (7) and designed to receive the ends of the handle (8).

6. Electrical household food preparation appliance according to claim 5, **characterised in that** one of the recesses (72) has an opening (71) designed to receive a hook (81) attached to one end of the handle (8).

7. Electrical household food preparation appliance according to claim 6, **characterised in that** the other recess (73) has a boss (74) designed to engage resiliently in a notch (83) formed on one end of the handle (8).
